# EUROPEAN PATENT SPECIFICATION

(11) **EP 1 809 496 B1**
(45) Date of publication and mention of the grant of the patent: **27.05.2009**
(21) Application number: 05796695.4
(22) Date of filing: 24.10.2005
(51) Int. Cl.: B60F 3/00

(54) **AMPHIBIOUS VEHICLE SUSPENSION**
AUFHÄNGUNG FÜR AMPHIBIENFAHRZEUG
SUSPENSION DE VÉHICULE AMPHIBIE

(30) Priority: 22.10.2004 GB 0423463; 22.10.2004 GB 0423470
(43) Date of publication of application: 25.07.2007
(73) Proprietor: Gibbs Technologies Ltd., Warwickshire CV11 4LY (GB)
(72) Inventor: LONGHILL, Simon, James, Auckland 1006 (NZ); BRIGGS, Stephen, John, Auckland 1006 (NZ); JEFFREY, Glen, Michael, Auckland 1006 (NZ); WEEKERS, Hans, Auckland 1006 (NZ)
(74) Representative: Pluckrose, Anthony William
(86) International application number: PCT/GB2005/004100
(87) International publication number: WO 2006/043101

(56) References cited:
- WO-A-01/74612
- WO-A-20/04039614
- WO-A-20/04103743
- GB-A- 2 394 699
- US-A- 4 958 584
- US-A- 5 531 179
- US-A- 5 562 066
- US-A- 5 575 352

## Description

The present invention relates to vehicle suspension for driven axles of amphibious vehicles, as disclosed in US 5, 531, 179, for example. This documents shows an amphibious vehile according to the preamble of claim 1.

In an amphibious vehicle, it is desirable to reduce drag when in marine mode, particularly drag caused by disconformities in those parts of the vehicle in contact with the water. Some such vehicles have retracting wheels with recesses above the water-line for the wheels to retract into. In the case of a planing amphibious vehicle, the hull recesses are generally above the water-line when the vehicle is on the plane; or in the case of our co-pending application no. WO 2004/103743A1, plates are fitted to the vehicle's bottom to cover as much as possible of the recesses for the rear driven wheels. Such plates are fixed after assembly of the vehicle suspension during manufacture. Nevertheless, tramping caused by hitting waves or wakes; or alternatively cornering; can cause the wheel recesses to catch the water, which may in turn slow or slew the vehicle. To minimize such effects, it is essential to minimize the length of such recesses in the longitudinal direction of the vehicle.

The use of upper and lower wishbone suspension has the advantage of bracing the suspension against torque input and vibration. It is also convenient to locate spring and damper units within the wheel retraction recesses; but as can be seen from WO 2004/103743 A1, both of these measures lead to large recesses in the vehicle hull.

Where an amphibious vehicle is based on passenger car conventions of vehicle packaging, seating across the vehicle will be provided, and wheel arches will be blended into the vehicle bodywork. However, if alternative packaging concepts from lighter and more compact vehicles are considered, different opportunities and challenges arise. Where seating is arranged longitudinally along the vehicle, it can be made narrower than a passenger car. Particularly where the power train is also aligned along the vehicle, a greater hull vee angle can be considered than for a passenger car type body with transverse seating and engine. The large vee angle offers agile marine handling, but requires the use of large diameter road wheels to give adequate ground clearance; which would suggest large wheel arches and bulky suspension.

Should these large wheel arches be integrated into the vehicle body styling, they would tend to negate the compactness and light weight of a narrow amphibious vehicle. This is emphasised with a large hull vee angle, as the wheels must be retracted through large angles to stay above the water-line when the vehicle is canted on water. However, if the wheel arches are allowed to protrude beyond the contours of the rest of the vehicle bodywork, the main structure of the vehicle can still be narrow and light in weight. Hence, a new incentive is found to provide a compact yet sturdy amphibious vehicle retractable suspension which requires minimal hull recesses. Similarly, if seating is provided substantially above the vehicle power train, rather than in front of the power train or behind it, the hull will be relatively short; so it becomes critically important to minimize interruptions to the planing surface.

One obj ect of the present invention is therefore to provide a retractable suspension for an amphibious vehicle, in which each hull recess, at least for the lower support member of the suspension, is significantly shorter in the longitudinal direction of the vehicle than each hull recess in known retractable suspension vehicles. It is particularly suitable for use with driven wheels.

According to the present invention, there is provided an amphibious vehicle having a prime mover, seating arrangements, at least two road wheels and a hull, wherein two road wheels are each arranged to be driven from the prime mover at least by means of a primary shaft and an intermediate shaft between each wheel and each primary shaft, each intermediate shaft having an articulatable torque transmitting joint at each end so as to enable each driven wheel to be moved upwards from a lowered, ground engaging position to a raised position above the vehicle's water-line, wherein each said driven wheel is mounted rotatably to an intermediate suspension member, the intermediate suspension member being mounted to and between an upper suspension member and a lower suspension member, the lower suspension member being accommodated within a narrow recess or slot in the hull of the vehicle when its driven wheel is in the raised position, and wherein the intermediate shaft is encaged by a cage means mounted between the intermediate suspension member and the hull of the vehicle so as to resist torsional forces on the intermediate suspension member when the wheels are rotating or being braked.

For the avoidance of doubt, an articulatable torque transmitting joint in a shaft comprises an output member and an input member which may pivot relative to each other, not necessarily in the direction of rotation of the shaft, but along the axis of the shaft; and which joint is capable of transmitting torque when said members are angled relative to each other; and includes universal joints.

Preferably, the cage means is a tube surrounding at least mainly the intermediate shaft. The cage means may comprise the lower suspension member. The width of the recess in the hull may be less in the longitudinal direction of the vehicle than the radius of the driven wheel. The hull may be configured for planing; while the upper suspension member is preferably a wishbone mounted pivotably to the body of the vehicle. Although a wishbone conventionally comprises two converging arms, the arms may be substantially parallel to each other. Alternatively, the upper suspension member may comprise a McPherson strut.

The torque transmitting joints may be universal couplings; which may in turn comprise constant velocity (CV) joints. Such CV joints may be arranged with a fixed inner joint and a plunging outer joint, as described in our co-pending patent application WO 2004/039614A1. Where a large hull vee angle is used, it may be necessary to rotate the road wheels as they are retracted, as shown in the figures, to ensure that the wheels remain clear of water when cornering. For example, an axis of rotation of a retractable road wheel which is substantially horizontal when the wheels are protracted and resting on level ground may be rotated at least thirty degrees from the horizontal when the wheels are retracted; preferably forty degrees.

To reduce the bulk of the suspension recesses in the hull, the spring and damper units for each road wheel may be mounted remotely from the upper and lower suspension members; preferably within a watertight interior compartment of the vehicle. The road wheel suspension retraction and protraction means may similarly be mounted remotely from the wheel suspension. Clearly both spring and damper units and retraction and protraction means must be mechanically linked to the upper and lower suspension members. The retraction and protraction means may be linked to a pivotal arm, to either end of which are mounted springs and dampers. The cage means may be sealed against ingress of water.

The passenger seating may be arranged along, or parallel to, the longitudinal axis of the vehicle. The prime mover may also be arranged along, or parallel to, the longitudinal axis of the vehicle.

An embodiment of the invention will now be described by way of example, with reference to the accompanying drawings in which:
Figure 1 is a side elevation view of an amphibious vehicle according to the invention;
Figure 2 is a partial transverse cross section through plane II-II of Figure 1 with the wheels up and retracted;
Figure 3 is a further transverse cross section through plane II-II of Figure 1 with the wheels down and protracted;
Figure 4 is a transverse elevation of the suspension for the rear wheels of the vehicle of Figure 1 with the wheels removed;
Figure 5 is a side elevation of the parts of the suspension shown in Figure 4, with the wheels retracted;
Figure 6 is a plan view of the suspension for the rear wheels of the vehicle of Figure 1 with the wheels retracted; and
Figure 7 is a plan view of the suspension for the rear wheels of the vehicle of Figure 1 with the wheels down and protracted.

Amphibious vehicle 2 comprises prime mover 4 driving marine drive means 6 through a marine transmission (not shown). Drive means 6 may be a jet. Locomotion on road is provided by wheels 8 and tyres 10, which are driven through a road transmission (not shown). The wheels and tyres are shielded by wheel arches 12. Body 14 and hull 16 may be formed separately and joined at split line 18, which is on the water-line. The hull may have a planing surface 20. At least a driver's seat 22 is provided; one or more passenger seats 24 may be provided astern of the driver's seat. The seating axis may be on the longitudinal axis of the vehicle, or parallel thereto. The axis of the prime mover may also be along, or parallel to, the longitudinal axis of the vehicle. Driver controls are provided, such as handlebars 26. A windscreen 28 may be provided for weather and spray protection. Spray management features (not shown) may also be built into the hull, along with a keel and strake(s).

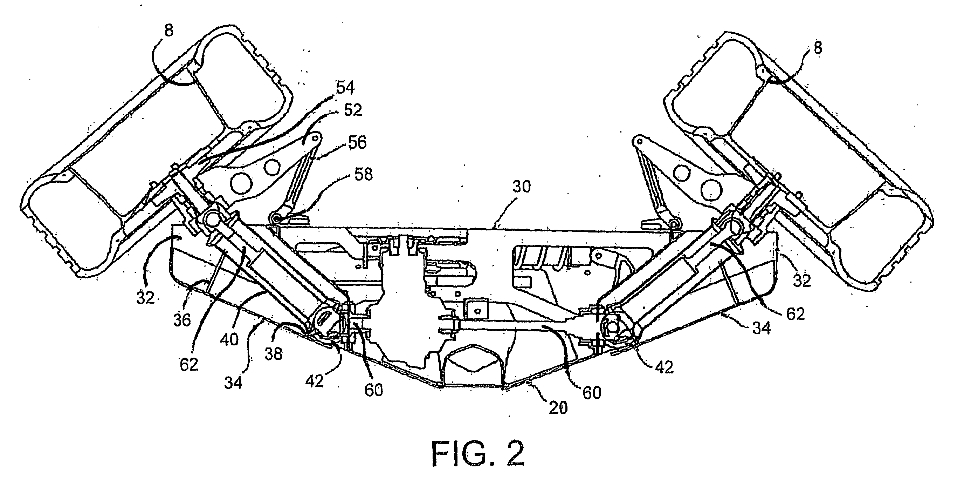

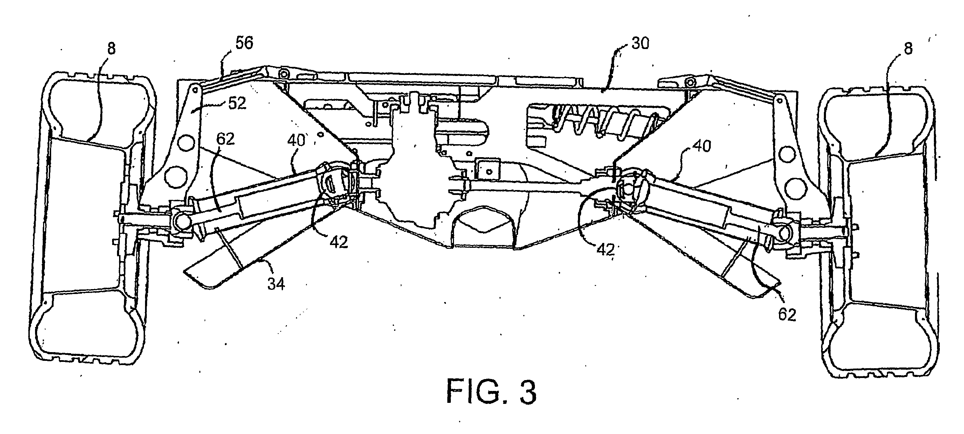

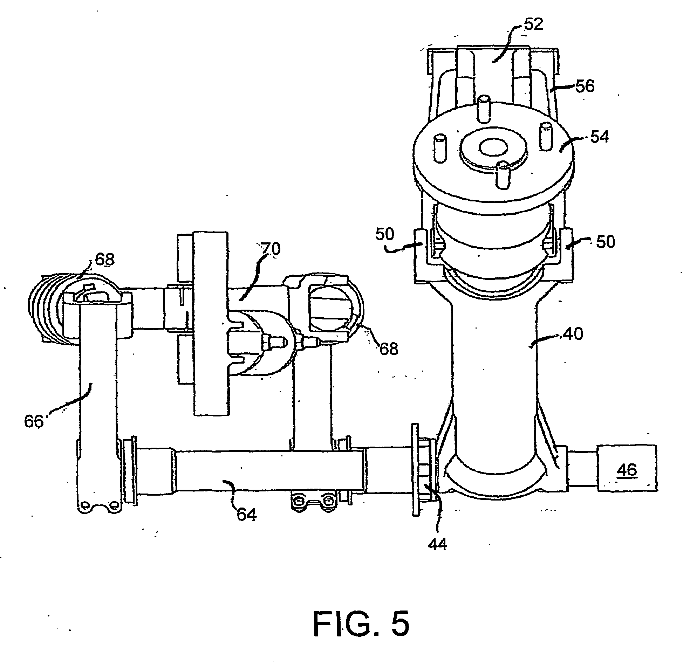

An advantage of a split hull/body construction as shown in Figure 2 and in other figures is that the mechanical components can be built up on the hull, forming a chassis or platform; then the upper body is joined to the platform to produce a complete vehicle. In Figures 2 and 3, which only show the lower part of the vehicle, the platform is designated 30. At each side of the vehicle is a slot 32 extending upwards from planing hull surface 20. When the wheels 8 are retracted as shown in Figure 2, each slot 32 is covered at the bottom by a cover 34, which is held in a closed position by brackets 36 and 38 extending downwardly from a suspension tube 40. Tube 40 is pivotally mounted inboard by means of bearings; one of which is shown as a circle 42 in Figure 2; and which can be seen as 44 and 46 on Figure 5. Seals (not shown) are appended to these bearings to keep the vehicle interior watertight. The vehicle interior may be divided into compartments (not shown).

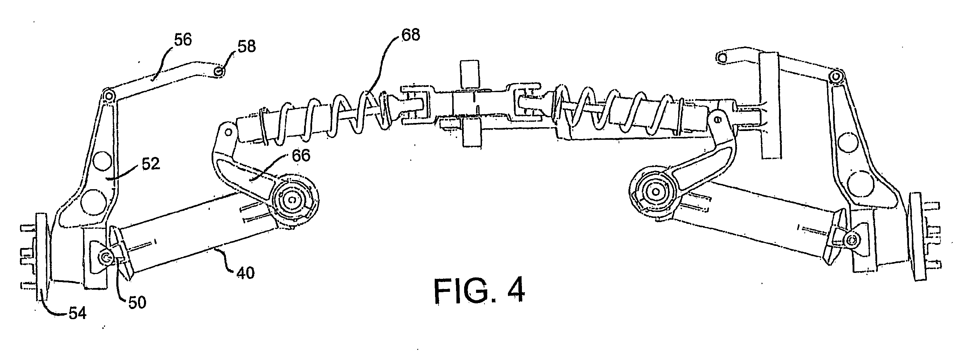

At the outer end of each tube 40 are brackets 50 (Fig. 4), which are pivotally connected to the lower end of an intermediate suspension member 52; which carries a bearing hub 54 to which wheel 8 is bolted. Intermediate suspension member 52 at its upper end is attached pivotally to an upper suspension member or link 56 which is in turn pivotally mounted at 58 to platform 30.

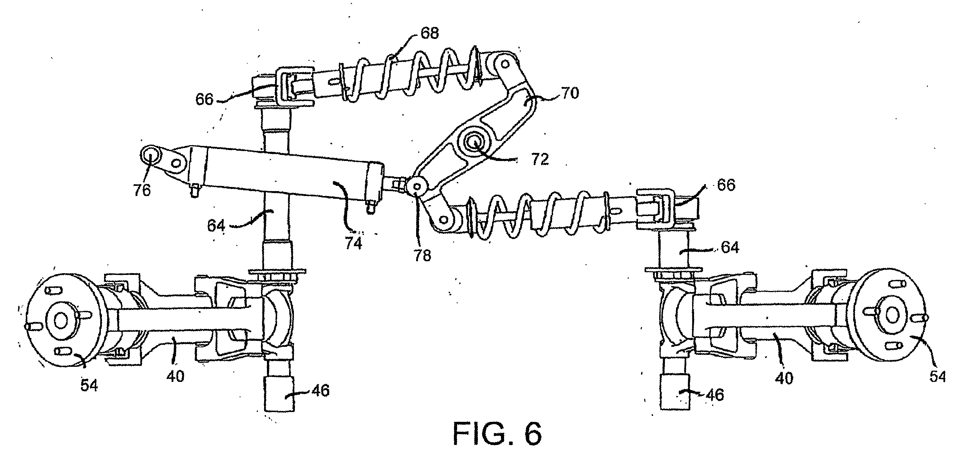

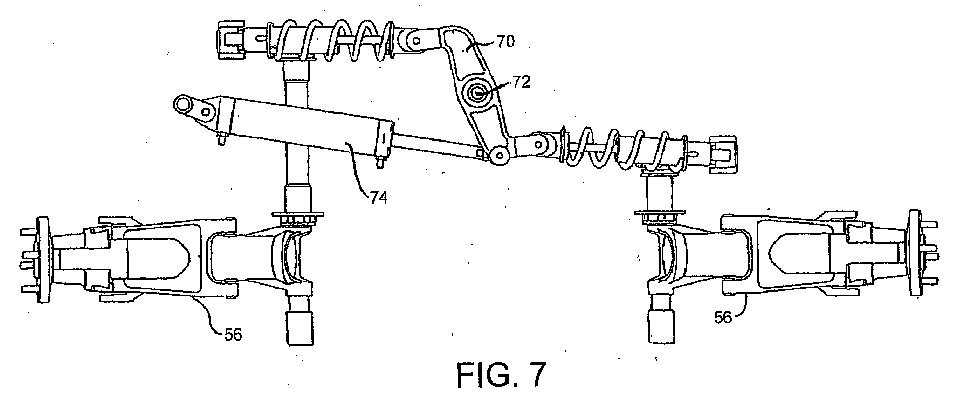

Vehicle 2 has a prime mover 4 driving road and marine transmissions. The power train includes primary shafts 60 which each drive an intermediate shaft 62, which connects to and drives hub 54. At the inner end of each tube 40, the tube is fixed to a proximal end of a longitudinal shaft 64 (Fig. 5). The distal end of shaft 64 is fixed to a rotating arm 66, which is in turn fixed to a suspension unit 68 comprising a coil spring and a co-axial telescopic damper. Unit 68 is in turn fixed to a suspension retraction rocker arm 70 (Figures 6 and 7). Arm 70 is pivotally mounted to the vehicle platform at 72. Suspension retraction ram 74 is mounted to platform 30 at pivot 76, and is lengthened or shortened by pneumatic or hydraulic pressure to retract or protract the wheels, as can be seen from figures 6 (retracted) and 7 (protracted).

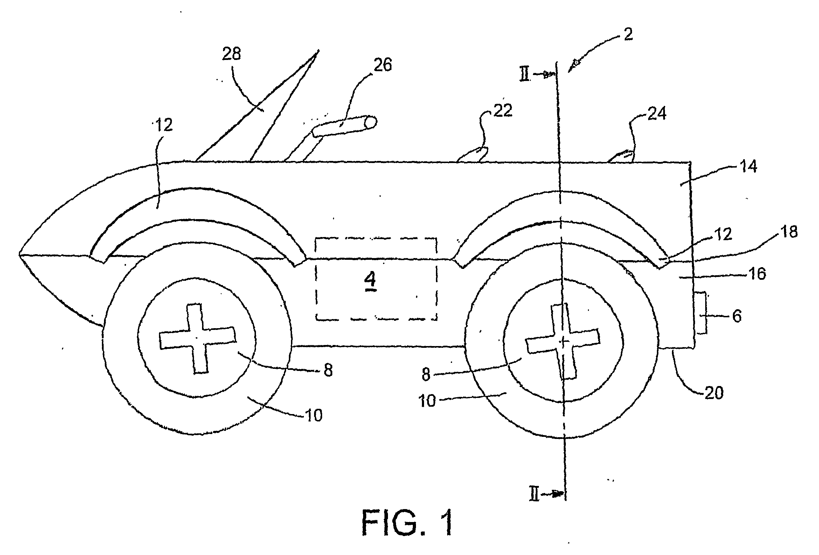

As may be seen particularly from Figures 2 and 3, the substantially horizontal alignment of spring and damper units 68 allows the retractable suspension to be neatly packaged below split line 18 (figure 1). This allows a low centre of gravity and metacentric height for good handling on both land and water. The springs and dampers are also packaged within the watertight interior of the vehicle, avoiding potential problems with corrosion and seizure of joints.

It will be appreciated that further modifications to the vehicle layout and systems may also be made as required without departing from the scope of the invention. In particular, it may be found convenient to use a lead screw driven by an electric motor to retract and protract the wheels. Suspension units 68 may be mounted vertically, or at an angle between vertical and horizontal, if this is found convenient for packaging purposes. Air spring suspension may be used; or hydraulic spring and damper units. The latter may be combined with suspension retraction means, as described in our co-pending patent application published as WO 01/74612.

The transmission of power from the prime mover to the wheels may comprise electric or hydraulic drive. Although the prime mover of the claims may be an internal combustion engine, it could be any other suitable driving means, for example an electric motor driven by electricity from a fuel cell. The vehicle structure may comprise an open frame, a monocoque, or any other enclosure.

## Claims

1. An amphibious vehicle (2) having a prime mover (4), seating arrangements (22,24), at least two road wheels (8) and a hull (16) defining a water-line, wherein two road wheels (8) are each arranged to be driven from the prime mover (4) at least by means of a primary shaft (60) and an intermediate shaft (62) between each wheel (8) and each primary shaft (60), each intermediate shaft (62) having an articulatable torque transmitting joint (42) at each end so as to enable each driven wheel (8) of the road wheels to be moved upwards from a lowered, ground engaging position to a raised position above the vehicle's water-line, wherein each said driven wheel (8) is mounted rotatably to an intermediate suspension member (52), the intermediate suspension member (52) being mounted to and between an upper suspension member (56) and a lower suspension member (40) the lower suspension member (40) being accommodated within a narrow recess (32) in the hull (16) of the vehicle (2) when its driven wheel (8) is in the raised position, **characterised in that** the intermediate shaft (62) is encaged by a cage means (40) mounted between the intermediate suspension member (52) and the hull (16) of the vehicle (2) so as to resist torsional forces on the intermediate suspension member (52) when the wheels (8) are rotating or being braked.

2. An amphibious vehicle according to claim 1, where the cage means is a tube (40) surrounding at least mainly the intermediate shaft (62).

3. An amphibious vehicle according to claim 1 or claim 2, wherein the cage means (40) is the lower suspension member (40).

4. An amphibious vehicle according to any of the above claims, where the width of the recess (32) in the hull (16) is less in the longitudinal direction of the vehicle than the radius of the road wheel (8).

5. An amphibious vehicle according to any of the above claims, where the upper suspension member (56) is a wishbone mounted pivotably to the body of the vehicle.

6. An amphibious vehicle according to claim 5, where the wishbone comprises two arms which are substantially parallel to each other.

7. An amphibious vehicle according to any of the above claims, where the hull is configured for planing.

8. An amphibious vehicle according to any of the above claims, where the torque transmitting joints are universal couplings.

9. An amphibious vehicle according to claim 8, where the universal couplings are constant velocity joints.

10. An amphibious vehicle according to claim 9, where the constant velocity joints are arranged with a fixed inner joint and a plunging outer joint.

11. An amphibious vehicle according to any of the above claims, where an axis of rotation of each road wheel is at least thirty degrees from the horizontal when the wheels are retracted.

12. An amphibious vehicle according to claim 11, where an axis of rotation of each road wheel is at least forty degrees from the horizontal when the wheels are retracted.

13. An amphibious vehicle according to any of the above claims, where spring and damper units (68) for each road wheel (8) are mounted so as to be linked to, but remote from, the upper and lower suspension members (56,40).

14. An amphibious vehicle according to claim 13, where the spring and damper units for each road wheel are mounted within a watertight interior compartment of the vehicle.

15. An amphibious vehicle according to any of the above claims, where an actuator for suspension retraction and protraction for the road wheels is mounted so as to be linked to, but remote from, the upper and lower suspension members.

16. An amphibious vehicle according to claim 15, where the suspension retraction and protraction means for the road wheels are mounted within a watertight interior compartment of the vehicle.

17. An amphibious vehicle according to claim 15 or claim 16, where the suspension retraction and protraction actuator is linked to a pivotal arm (70) to either end of which are mounted springs and dampers.

18. An amphibious vehicle according to any of the above claims, where the seating arrangement is aligned along or parallel to a longitudinal axis of the vehicle.

19. An amphibious vehicle according to any of the above claims, where the prime mover is aligned along or parallel to a longitudinal axis of the vehicle.

20. An amphibious vehicle according to any of the above claims, where the cage means is sealed against ingress of water.

## Patentansprüche

1. Amphibienfahrzeug (2) mit einer Antriebsmaschine (4), Sitzanordnungen (22, 24), wenigstens zwei Laufrädern (8) und einem Rumpf (16), der eine Wasserlinie definiert, wobei zwei Laufräder (8) jeweils dazu angeordnet sind, wenigstens mittels einer Primärwelle (60) und einer Zwischenwelle (62) zwischen jedem Rad (8) und jeder Primärwelle (60) von der Antriebsmaschine (4) angetrieben zu werden, wobei jede Zwischenwelle (62) einen gelenkig beweglichen, Drehkraft übertragenden Anschluss (42) an jedem Ende aufweist, um zu ermöglichen, dass jedes angetriebene Rad (8) der Laufräder von einer abgesenkten, am Boden angreifenden Stellung aufwärts über die Wasserlinie des Fahrzeugs bewegt werden kann, wobei jedes angetriebene Rad (8) drehbar an einem Aufhängungszwischenelement (52) angebracht ist, wobei das Aufhängungszwischenelement (52) an und zwischen einem oberen Aufhängungselement (56) und einem unteren Aufhängungselement (40) angebracht ist, wobei das untere Aufhängungselement (40) in einer schmalen Aussparung (32) in dem Rumpf (16) des Fahrzeugs (2) aufgenommen ist, wenn sich sein angetriebenes Rad (8) in der angehobenen Stellung befindet, **dadurch gekennzeichnet, dass** die Zwischenwelle (62) von einem Gehäuseelement (40) umgeben ist, das zwischen dem Aufhängungszwischenelement (52) und dem Rumpf (16) des Fahrzeugs (2) angebracht ist, um Torsionskräften an dem Aufhängungszwischenelement (52) zu widerstehen, wenn sich die Räder (8) drehen oder gebremst werden.

2. Amphibienfahrzeug nach Anspruch 1, wobei das Gehäusemittel ein Rohr (40) ist, das wenigstens hauptsächlich die Zwischenwelle (62) umgibt.

3. Amphibienfahrzeug nach Anspruch 1 oder Anspruch 2, wobei das Gehäusemittel (40) das untere Aufhängungselement (40) ist.

4. Amphibienfahrzeug nach einem der vorhergehenden Ansprüche, wobei die Breite der Aussparung (32) in dem Rumpf (16) in der Längsrichtung des Fahrzeugs kleiner ist als der Radius des Laufrads (8).

5. Amphibienfahrzeug nach einem der vorhergehenden Ansprüche, wobei das obere Aufhängungselement (56) ein schwenkbar an dem Fahrzeugkörper angebrachter Querlenker ist.

6. Amphibienfahrzeug nach Anspruch 5, wobei der Querlenker zwei Arme umfasst, welche im Wesentlichen parallel zueinander sind.

7. Amphibienfahrzeug nach einem der vorhergehenden Ansprüche, wobei der Rumpf für die Gleitfahrt ausgebildet ist.

8. Amphibienfahrzeug nach einem der vorhergehenden Ansprüche, wobei die das Drehmoment übertragenden Anschlüsse Gelenkkupplungen sind.

9. Amphibienfahrzeug nach Anspruch 8, wobei die Gelenkkupplungen Gleichlaufgelenke sind.

10. Amphibienfahrzeug nach Anspruch 9, wobei die Gleichlaufgelenke mit einem festen Innengelenk und einem beweglichen Außengelenk angeordnet sind.

11. Amphibierifahrzeug nach einem der vorhergehenden Ansprüche, wobei eine Drehachse jedes Laufrads wenigstens 30 Grad zur Horizontale aufweist, wenn die Räder eingezogen sind.

12. Amphibienfahrzeug nach Anspruch 11, wobei eine Drehachse jedes Laufrads wenigstens 40 Grad zur Horizontale aufweist, wenn die Räder eingezogen sind.

13. Amphibienfahrzeug nach einem der vorhergehenden Ansprüche, wobei Feder- und Dämpfereinheiten (68) für jedes Laufrad (8) so angebracht sind, dass sie mit den oberen und unteren Aufhängungselementen (56, 40) verbunden, aber davon entfernt sind.

14. Amphibienfahrzeug nach Anspruch 13, wobei die Feder- und Dämpfereinheiten für jedes Laufrad in einem wasserdichten Innenabteil des Fahrzeugs angebracht sind.

15. Amphibienfahrzeug nach einem der vorhergehenden Ansprüche, wobei ein Bedienteil für das Zurückziehen und Vorziehen der Aufhängung der Laufräder so angebracht ist, dass es mit den oberen und unteren Aufhängungselementen verbunden, aber davon entfernt ist.

16. Amphibienfahrzeug nach Anspruch 15, wobei die Mittel für das Zurückziehen und Vorziehen der Aufhängung der Laufräder in einem wasserdichten Innenabteil des Fahrzeugs angebracht sind.

17. Amphibienfahrzeug nach Anspruch 15 oder Anspruch 16, wobei das Bedienteil für das Zurückziehen und Vorziehen der Aufhängung mit einem Schwenkarm (70) verbunden ist, an welchem an beiden Enden Federn und Dämpfer angebracht sind.

18. Amphibienfahrzeug nach einem der vorhergehenden Ansprüche, wobei die Sitzanordnung entlang oder parallel zu einer Längsachse des Fahrzeugs ausgerichtet ist.

19. Amphibienfahrzeug nach einem der vorhergehenden Ansprüche, wobei die Antriebsmaschine entlang oder parallel zu einer Längsachse des Fahrzeugs ausgerichtet ist.

20. Amphibienfahrzeug nach einem der vorhergehenden Ansprüche, wobei das Gehäusemittel gegen das Eindringen von Wasser abgedichtet ist.

## Revendications

1. Véhicule amphibie (2) ayant une machine motrice (4), des agencements (22, 24) pour s'asseoir, au moins deux roues (8) de roulement et une coque (16) définissant une ligne de flottaison, dans lequel les deux roues (8) de roulement sont agencées de façon à être entraînées par la machine motrice (4) au moins au moyen d'un arbre primaire (60) et d'un arbre intermédiaire (62) entre chaque roue (8) et chaque arbre primaire (60), chaque arbre intermédiaire (62) ayant un joint articulable (42) de transmission de couple à chaque extrémité afin de permettre à chaque roue menée (8) des roues de roulement d'être élevée depuis une position abaissée de contact avec le sol jusqu'à une position relevée au-dessus de la ligne de flottaison du véhicule, dans lequel chaque roue menée (8) est montée de façon à pouvoir tourner sur un élément de suspension intermédiaire (52), l'élément de suspension intermédiaire (52) étant monté sur et entre un élément supérieur (56) de suspension et un élément inférieur (40) de suspension, l'élément inférieur (40) de suspension étant logé dans un évidement étroit (32) dans la coque (16) du véhicule (2) lorsque sa roue menée (8) est dans sa position relevée, **caractérisé en ce que** l'arbre intermédiaire (62) est encagé par un moyen à cage (40) monté entre l'élément intermédiaire (52) de suspension et la coque (16) du véhicule (2) afin de résister à des forces de torsion sur l'élément intermédiaire (52) de suspension lorsque les roues (8) sont en rotation ou sont freinées.

2. Véhicule amphibie selon la revendication 1, dans lequel le moyen à cage est un tube (40) entourant au moins principalement l'arbre intermédiaire (62).

3. Véhicule amphibie selon la revendication 1 ou la revendication 2, dans lequel le moyen à cage (40) est l'élément inférieur (40) de suspension.

4. Véhicule amphibie selon l'une quelconque des revendications précédentes, dans lequel la largeur de l'évidement (32) dans la coque (16), dans la direction longitudinale du véhicule, est plus petite que le rayon de la roue (8) de roulement.

5. Véhicule amphibie selon l'une quelconque des revendications précédentes, dans lequel l'élément supérieur (56) de suspension est un triangle monté de façon pivotante sur la carrosserie du véhicule.

6. Véhicule amphibie selon la revendication 5, dans lequel le triangle comporte deux bras qui sont sensiblement parallèles entre eux.

7. Véhicule amphibie selon l'une quelconque des revendications précédentes, dans lequel la coque est configurée pour planer.

8. Véhicule amphibie selon l'une quelconque des revendications précédentes, dans lequel les joints de transmission de couple sont des accouplements universels.

9. Véhicule amphibie selon la revendication 8, dans lequel les accouplements universels sont des joints homocinétiques.

10. Véhicule amphibie selon la revendication 9, dans lequel les joints homocinétiques sont agencés avec un joint intérieur fixe et un joint extérieur plongeant.

11. Véhicule amphibie selon l'une quelconque des revendications précédentes, dans lequel un axe de rotation de chaque roue de roulement est à au moins trente degrés de l'horizontale lorsque les roues sont rétractées.

12. Véhicule amphibie selon la revendication 11, dans lequel un axe de rotation de chaque roue de roulement est à au moins quarante degrés de l'horizontale lorsque les roues sont rétractées.

13. Véhicule amphibie selon l'une quelconque des revendications précédentes, dans lequel les unités à ressort et amortisseur (58) pour chaque roue de roulement (8) sont montées de façon à être reliées aux éléments supérieur et inférieur (56, 40) de suspension, mais à distance de ceux-ci.

14. Véhicule amphibie selon la revendication 13, dans lequel les unités à ressort et amortisseur pour chaque roue de roulement sont montées dans un compartiment intérieur étanche à l'eau du véhicule.

15. Véhicule amphibie selon l'une quelconque des revendications précédentes, dans lequel un actionneur pour rétracter et allonger la suspension pour les roues de roulement est monté de façon à être relié aux éléments supérieur et inférieur de suspension, mais à distance de ceux-ci.

16. Véhicule amphibie selon la revendication 15, dans lequel les moyens pour rétracter et allonger la suspension pour les roues de roulement sont montés dans un compartiment intérieur étanche à l'eau du véhicule.

17. Véhicule amphibie selon la revendication 15 ou la revendication 16, dans lequel l'actionneur pour rétracter et allonger la suspension est relié à un bras pivotant (70) à chaque extrémité duquel des ressorts et des amortisseurs sont montés.

18. Véhicule amphibie selon l'une quelconque des revendications précédentes, dans lequel l'agencement pour s'asseoir est aligné le long d'un axe longitudinal du véhicule ou est parallèle à cet axe.

19. Véhicule amphibie selon l'une quelconque des revendications précédentes, dans lequel la machine motrice est alignée le long d'un axe longitudinal du véhicule ou est parallèle à cet axe.

20. Véhicule amphibie selon l'une quelconque des revendications précédentes, dans lequel le moyen à cage est fermé de façon étanche pour empêcher l'entrée d'eau.
